# EUROPEAN PATENT APPLICATION

(11) **EP 4 431 220 A1**
(43) Date of publication of application: **18.09.2024**
(21) Application number: 24155548.1
(22) Date of filing: 02.02.2024
(51) Int. Cl.: B23K 26/12, B23K 26/14, B23K 26/20, H01M 50/169, H01M 50/188, B23K 101/04, B23K 101/36

(54) **METHOD FOR MANUFACTURING ELECTRICAL STORAGE DEVICE**

(30) Priority: 15.03.2023 JP 2023040202
(71) Applicant: Prime Planet Energy & Solutions, Inc., Chuo-ku Tokyo 103-0022 (JP)
(72) Inventor: YAMAMOTO, Haruhiko, Tokyo, 103-0022 (JP)
(74) Representative: Kuhnen & Wacker Patent- und Rechtsanwaltsbüro PartG mbB

(57) **Abstract**

A method for manufacturing an electrical storage device disclosed herein includes assembling (S20) including mounting a sealing plate (14) to an opening (12h) of a case body (12), shielding (S30) including providing a shielding portion (200) between a resin member (70) and a peripheral edge portion (14c) of the sealing plate (14), and laser welding (S40) the case body (12) and the sealing plate (14) including irradiating the sealing plate (14) with laser light (LA) along the peripheral edge portion (14c) of the sealing plate (14) in a state where the shielding portion (200) is provided, and in performing the laser welding, while an assist gas (AG) is supplied to a portion around the shielding portion (200), the portion is irradiated with the laser light (LA).

## Description

### BACKGROUND OF THE DISCLOSURE

### 1. Field

The present disclosure relates to a method for manufacturing an electrical storage device. 2. Background

Conventionally, electrical storage devices that include a case body accommodating an electrode body and a sealing plate sealing an opening in the case body have been known. The case body and the sealing plate are welded together, for example, by laser welding or the like to be sealed. For example, Japanese Laid-open Patent Publication No. 2013-54964 discloses a battery in which a shielding portion is provided between a seam of the case body and the sealing plate (a portion that is laser-welded) and a resin member that separates an outer surface of the sealing plate and a terminal from each other. According to the above-described technology, color change (burning, scorching, or the like by light) of the resin member due to reflected light of laser light used for laser welding or the like is suppressed.

### SUMMARY

According to a study of the present inventors, even when a shielding portion is provided around a resin member, the shielding portion is stained black in some cases. Because the shielding portion is stained black, heat from laser welding is likely to be absorbed by the shielding portion, and thermal effects on the plastic member can occur due to heat transfer.

It is therefore a main object of the present disclosure to provide a technology that can suppress a heat effect that possibly occurs during laser welding.

According to one aspect of a technology disclosed herein, provided is a method for manufacturing an electrical storage device, that includes preparing a bottomed case body having an opening, a sealing plate provided with a resin member on an outer surface, and an electrode body, assembling an electrical storage device by accommodating the electrode body in the case body and mounting the sealing plate to the opening of the case body, shielding by providing a shielding portion between the resin member and a peripheral edge portion of the sealing plate on an outer surface of the sealing plate, and laser welding the case body and the sealing plate by irradiating the sealing plate with laser light along the peripheral edge portion of the sealing plate in a state where the shielding portion is provided, and in which, in performing the laser welding, an assist gas including a non-oxidizing gas and an oxidizing gas is supplied to at least the peripheral edge portion of the sealing plate located around the shielding portion and a portion to which the assist gas is supplied is irradiated with the laser light.

According to the above-described configuration, the assist gas including the oxidizing gas is used, and therefore, a black color of a deposit on the shielding portion generated by laser welding is made lighter than that when a non-oxidizing gas is used. Thus, reflected light of the laser light LA is less likely to be absorbed by the deposit AD, so that increase in temperatures of the deposit and the shielding portion is suppressed. As a result, a thermal effect on the resin member that contacts the shielding portion or is located near the shielding portion can be reduced.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view schematically illustrating a battery according to one preferred embodiment.
FIG. 2 is a view schematically illustrating an internal structure of the battery according to one preferred embodiment.
FIG. 3 is a view schematically illustrating a configuration of an electrode body.
FIG. 4 is a plan view schematically illustrating the battery of FIG. 1.
FIG. 5 is a flowchart illustrating a method for manufacturing a battery according to one preferred embodiment.
FIG. 6 is a schematic perspective view of the battery illustrating a shielding step S30.
FIG. 7 is a schematic plan view of the battery illustrating the shielding step S30.
FIG. 8 is a diagram illustrating a welding step S40 and a schematic cross-sectional view taken along line VIII-VIII in FIG. 7.

### DETAILED DESCRIPTION OF THE PREFERRED EMBODIMENTS

Preferred embodiments of a technology disclosed herein will be described below with reference to the accompanying drawings. Note that matters other than matters specifically mentioned in this specification and necessary for carrying out the technology disclosed herein (for example, general configuration and manufacturing process (for example, a liquid injecting step, a charging step, or the like) or the like) can be understood as design matters for those skilled in the art based on the related art in the related field. The technology disclosed herein can be carried out based on contents disclosed in this specification and the common general technical knowledge in the field. Note that each of the accompanying drawings is schematic and a dimensional relation (of length, width, thickness, or the like) does not necessarily reflect an actual dimensional relation. In the drawings described below, the members and parts with the same operation are denoted by the same reference signs and the overlapping description may be omitted or simplified.

In this specification, when a numerical range is described as "A to B (herein, A and B are arbitrary numerical values)," the notation means "A or more and B or less" and also encompasses "a range that exceeds A and is less than B," "a range that exceeds A and is B or less," and "a range that is A or more and less than B."

As used in this specification, the term "electrical storage device" refers to a device in which a charging and discharging reaction is generated by moving of a charge carrier between a pair of electrodes (a positive electrode and a negative electrode) via an electrolyte. The electrical storage device can encompass a secondary battery, such as a lithium-ion secondary battery, a nickel-hydrogen battery, a nickel-cadmium battery, or the like, and a capacitor (a physical battery), such as a lithium-ion capacitor, an electric double layer capacitor, or the like. As one preferred embodiment of an electrical storage device disclosed herein, a lithium-ion secondary battery will be described as an example, but it is not intended to limit a target to which the technology disclosed herein is applied to a battery.

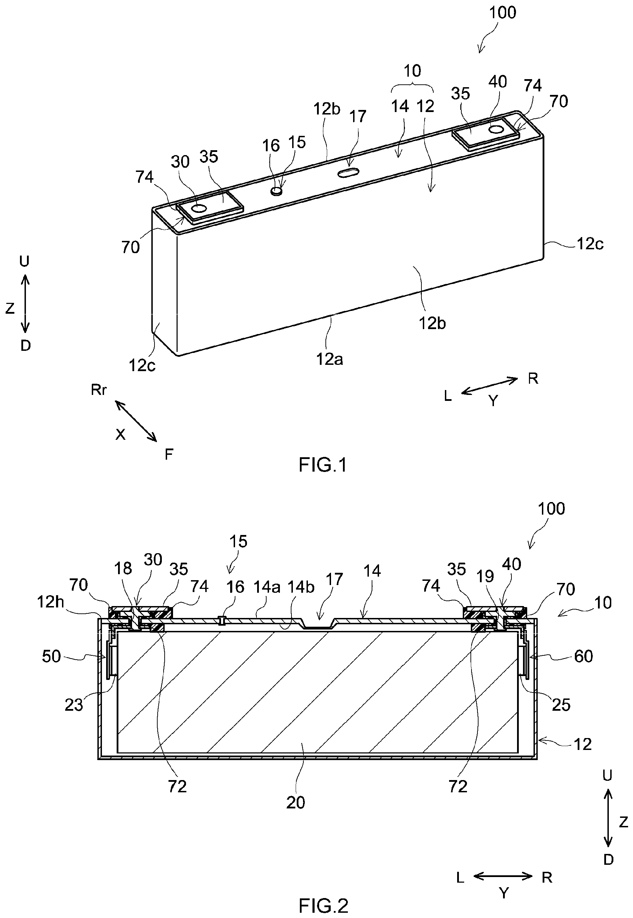

FIG. 1 is a perspective view of a secondary battery 100 according to this preferred embodiment. FIG. 2 is a view schematically illustrating an internal structure of the secondary battery 100. Note that reference signs L, R, F, Rr, U, and D in the drawings denote left, right, front, rear, up, and down, respectively, and reference signs X, Y, and Z in the drawings denote a short side direction of the electrical storage device 100, a long side direction thereof orthogonal to the short side direction, and an up-down direction thereof orthogonal to the short side direction, respectively. However, these directions are defined for convenience of explanation, and do not limit an installation form of the secondary battery 100. A dimensional relation (of a length, a width, a thickness, or the like) in each of the accompanying drawings does not necessarily reflect an actual dimensional relation.

### <Secondary Battery>

As illustrated in FIG. 1 and FIG. 2, the secondary battery 100 includes an electrode body 20, an electrolytic solution (not illustrated), a case 10 that accommodates the electrode body 20 and the electrolytic solution, a positive electrode terminal 30, and a negative electrode terminal 40.

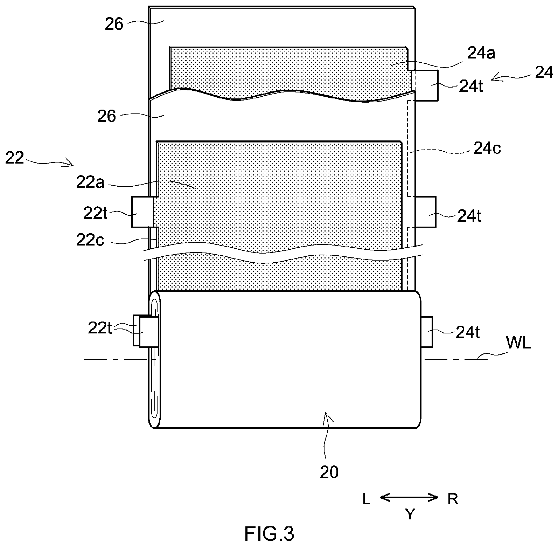

FIG. 3 is a view schematically illustrating a configuration of the electrode body 20. As illustrated in FIG. 3, the electrode body 20 is herein a wound electrode body obtained by stacking a strip-shaped positive electrode sheet 22 and a strip-like negative electrode sheet 24 with the two strip-shaped separators 26 interposed therebetween such that the positive electrode sheet 22 and the negative electrode sheet 24 are insulated from each other and winding an obtained stacked body in a longitudinal direction with a winding axis WL as a center. However, the electrode body may be a stacked electrode body obtained by stacking a rectangular positive electrode sheet and a rectangular negative electrode sheet such that the positive electrode sheet and the negative electrode sheet are insulated from each other by a rectangular separator. As another option, the electrode body may be a stacked electrode body obtained by stacking a rectangular positive electrode sheet and a rectangular negative electrode sheet such that the positive electrode sheet and the negative electrode sheet are insulated from each other. As illustrated in FIG. 2, herein, the electrode body 20 has a so-called lateral tab structure in which a positive electrode tab group 23 and a negative electrode tab group 25 are located at left and right of the electrode body 20. However, the electrode body may have a so-called upper tab structure in which a positive electrode tab group and a negative electrode tab group are located at an upper side of the electrode body.

As illustrated in FIG. 3, the positive electrode sheet 22 is a long strip-shaped member. A configuration of the positive electrode sheet 22 is not particularly limited and may be similar to a configuration of a positive electrode sheet used for a known battery. For example, the positive electrode sheet 22 includes a positive electrode current collector 22c and a positive electrode active material layer 22a fixed to at least one surface of the positive electrode current collector 22c. Note that the positive electrode sheet 22 may include a positive electrode protective layer (not illustrated) configured to have a lower electrical conductivity than that of the positive electrode active material layer 22a.

The positive electrode current collector 22c is a long strip-shaped member. The positive electrode current collector 22c is formed of a conductive metal, such as, for example, aluminum, aluminum alloy, nickel, stainless steel, or the like. The positive electrode current collector 22c is a metal foil, specifically, an aluminum foil, herein. Dimensions of the positive electrode current collector 22c are not particularly limited and may be determined, as appropriate, in accordance with a battery design. The plurality of positive electrode tabs 22t are provided in one end portion of the positive electrode current collector 22c in a long side direction Y (a left end portion in FIG. 3). The positive electrode tab 22t is a portion of the positive electrode current collector 22c and is formed of a metal foil (an aluminum foil). The positive electrode active material layer 22a is formed in a portion of the positive electrode tab 22t. The positive electrode active material layer 22a is not formed in at least a portion of the positive electrode tab 22t, and the positive electrode current collector 22c is exposed in the portion. The plurality of positive electrode tabs 22t are stacked in one end portion in the long side direction Y (a left end portion in FIG. 2) to form the positive electrode tab group 23. The plurality of positive electrode tabs 22t are bent such that respective outer side ends thereof are aligned. The positive electrode tab group 23 is connected to the positive electrode terminal 30 via a positive electrode current collector 50.

As illustrated in FIG. 3, the positive electrode active material layer 22a is provided in a strip shape to extend in a longitudinal direction of the strip-shaped positive electrode current collector 22c. The positive electrode active material layer 22a includes a positive electrode active material. As the positive electrode active material, a known positive electrode active material used for a lithium-ion secondary battery may be used. Specifically, for example, as the positive electrode active material, a lithium composite oxide, a lithium-transition metal phosphate compound, or the like may be used. As for the above-described positive electrode active materials, one of them may be independently used, and two or more of them may be used in combination. The positive electrode active material layer 22a can include some other component, such as, for example, a conductive material, a binder, or the like, than the positive electrode active material. As the conductive material, for example, carbon black, such as acetylene black (AB) or the like, and other carbon materials (for example, graphite or the like) can be preferably used. As the binder, for example, polyvinylidene fluoride (PVdF) or the like can be used.

As illustrated in FIG. 3, the negative electrode sheet 24 is a long strip-shaped member. A configuration of the negative electrode sheet 24 is not particularly limited and may be similar to a configuration of a negative electrode sheet used for a known battery. For example, the negative electrode sheet 24 includes a negative electrode current collector 24c and a negative electrode active material layer 24a fixed to at least one surface of the negative electrode current collector 24c.

The negative electrode current collector 24c has a strip shape. The negative electrode current collector 24c is formed of a conductive metal, such as, for example, copper, copper alloy, nickel, stainless steel, or the like. The negative electrode current collector 24c is a metal foil, specifically, a copper foil herein. Dimensions of the negative electrode current collector 24c are not particularly limited and may be determined, as appropriate, in accordance with a battery design. The plurality of negative electrode tabs 24t are provided in one end portion of the negative electrode current collector 24c in the long side direction Y (a right end portion in FIG. 3). The negative electrode tab 24t is a portion of the negative electrode current collector 24c and is formed of a metal foil (for example, a copper foil). The negative electrode active material layer 24a is formed in a portion of the negative electrode tab 24t. The negative electrode active material layer 24a is not formed in at least a portion of the negative electrode tab 24t, and the negative electrode current collector 24c is exposed in the portion. The plurality of negative electrode tabs 24t are stacked in one end portion in the long side direction Y (a right end portion in FIG. 2) to form the negative electrode tab group 25. The plurality of negative electrode tabs 24t are bent such that respective outer side ends thereof are aligned. The negative electrode tab group 25 is connected to the negative electrode terminal 40 via a negative electrode current collector 60.

As illustrated in FIG. 3, the negative electrode active material layer 24a is provided in a strip shape to extend in a longitudinal direction of the strip-shaped negative electrode current collector 24c. The negative electrode active material layer 24a includes a negative electrode active material. As the negative electrode active material, although not particularly limited, for example, a carbon material, such as graphite, hard carbon, soft carbon, or the like, can be used. The graphite may be natural graphite, may be artificial graphite, and may be amorphous carbon-coated graphite in a form in which graphite is coated with an amorphous carbon material. The negative electrode active material layer 24a can include some other component, such as, for example, a binder, a thickener, or the like, than the negative electrode active material. As the binder, for example, styrene butadiene rubber (SBR), polyvinylidene fluoride (PVdF), or the like can be used. As the thickener, for example, carboxymethyl cellulose (CMC) or the like can be used.

The separator 26 is an insulating resin sheet in which a plurality of micro through holes through which a charge carrier can pass are formed. A configuration of the separator 26 is not particularly limited and may be similar to a configuration of a separator used for a known battery. Examples of the separator 26 include, for example, a porous sheet (film) formed of resin, such as polyethylene (PE), polypropylene (PP), polyester, cellulose, polyamide, or the like. A heat resistance layer (HRL) may be provided on a surface of the separator 26.

As described above, the secondary battery 100 includes the electrolytic solution. The electrolytic solution is not particularly limited and may be similar to an electrolytic solution used for a known battery. The electrolytic solution can be, for example, a nonaqueous electrolytic solution including a nonaqueous solvent (an organic solvent) and an electrolyte salt (a supporting salt). As the nonaqueous solvent, for example, ethylene carbonate (EC), diethyl carbonate (DEC), dimethyl carbonate (DMC), ethyl methyl carbonate (EMC), or the like can be used. As the supporting salt, various lithium salts can be used. Among various lithium salts, a lithium salt, such as LiPF₆, LiBF₄, or like, is preferable. The electrolytic solution may include various additives, such as, for example, a film forming agent, a gas generating agent, a dispersant, a thickener, or the like.

As illustrated in FIG. 1 and FIG. 2, the case 10 includes a case body 12 and a sealing plate 14. The positive electrode terminal 30 and the negative electrode terminal 40 are attached to the sealing plate 14. The positive electrode terminal 30 is attached to an end portion of the sealing plate 14 at one side in the long side direction Y (the left end potion in each of FIG. 1 and FIG. 2). The negative electrode terminal 40 is attached to an end portion of the sealing plate 14 at the other side in the long side direction Y (the right end portion in each of FIG. 1 and FIG. 2). The positive electrode terminal 30 and the negative electrode terminal 40 are inserted in terminal mounting holes 18 and 19, respectively, and extend from a side of an outer surface 14a of the sealing plate 14 toward an inner surface 14b. A lower end of the positive electrode terminal 30 is connected to the positive electrode current collector 50 in the case body 12. The positive electrode terminal 30 is connected to the positive electrode sheet 22 of the electrode body 20 via the positive electrode current collector 50. A lower end of the negative electrode terminal 40 is connected to the negative electrode current collector 60 in the case body 12. The negative electrode terminal 40 is connected to the negative electrode sheet 24 of the electrode body 20 via the negative electrode current collector 60.

The positive electrode terminal 30 is preferably formed of a metal, and is more preferably formed of, for example, aluminum or aluminum alloy. The negative electrode terminal 40 is preferably formed of a metal, and is more preferably formed of, for example, copper or copper alloy. As illustrated in FIG. 1, each of the positive electrode terminal 30 and the negative electrode terminal 40 is electrically connected to a corresponding plate-like external conductive member 35 outside the case 10. The external conductive member 35 is a member to which a busbar is attached in electrically connecting a plurality of secondary batteries to each other. The external conductive member 35 is preferably formed of a metal, and is more preferably formed of, for example, aluminum or aluminum alloy. However, the external conductive member 35 is not essential and may be omitted in other embodiments.

As illustrated in FIG. 1 and FIG. 2, each of the positive electrode terminal 30 and the negative electrode terminal 40 is insulated from the sealing plate 14 by a corresponding resin member 70. In this preferred embodiment, the resin member 70 includes a gasket 72 and an external insulating member 74. The gasket 72 is mounted to a corresponding one of the positive electrode terminal 30 and the negative electrode terminal 40. The gasket 72 is arranged between the outer surface 14a of the sealing plate 14 and the corresponding one of the positive electrode terminal 30 and the negative electrode terminal 40. The gasket 72 is also arranged between the corresponding one of the positive electrode terminal 30 and the negative electrode terminal 40 and the sealing plate 14 in a corresponding one of the terminal mounting holes 18 and 19. Thus, the positive electrode terminal 30 and the negative electrode terminal 40 are insulated from the sealing plate 14. The external insulating member 74 is arranged between the external conductive member 35 and the outer surface of the sealing plate 14 to provide isolation between the external conductive member 35 and the sealing plate 14. The resin member 70 can be formed of a synthetic resin material, that is, for example, a fluororesin, such as perfluoro alkoxyalkane (PFA), polytetrafluoroethylene (PTFE), or the like, polyphenylene sulfide (PPS), polyphenylene ether (PPE), or the like. Note that, in a preferred embodiment that does not include the external conductive member 35, the external insulating member 74 may be omitted.

As illustrated in FIG. 1, the case 10 has a bottomed rectangular parallelopiped (rectangle) outer shape. A known material can be used for the case 10 without any particular limitation. The case 10 (the case body 12 and the sealing plate 14) can be formed of, for example, aluminum, aluminum alloy, stainless steel, iron, iron alloy, or the like. The case 10 is preferably formed of aluminum among the above-described materials.

The case body 12 is a housing that accommodates the electrode body 20 and a nonaqueous electrolytic solution. The case body 12 is a bottomed rectangular container having a surface at one side (an upper surface herein) formed as the opening 12h. The opening 12h has an approximately rectangular shape herein. The case body 12 has long sides and short sides, and includes a bottom wall 12a having an approximately rectangular shape when viewed from top, a pair of long side walls 12b extending upward in an up-down direction Z from the long sides of the bottom wall 12a and opposed to each other and a pair of short side walls 12c extending upward from short sides of the bottom wall 12a in the up-down direction Z and opposed to each other. An area of the short side wall 12c is smaller than an area of the long side wall 12b. Although not particularly limited, an average thickness (an average plate thickness) of the case body 12 may be generally 0.5 mm or more and, for example, 1 mm or more from a viewpoint of durability or the like, and may be generally 5 mm or less and, for example, 3 mm or less from a viewpoint of costs and an energy density.

The sealing plate 14 has an approximately rectangular shape when viewed from top herein, and is a member that seals the opening 12h of the case body 12. The sealing plate 14 includes the inner surface 14b (see FIG. 2) that is a surface of the secondary battery 100 at an inner side (a side opposed to the electrode body 20) and the outer surface 14a (see FIG. 2) that is a surface of the secondary battery 100 at an outer side. As illustrated in FIG. 1, the sealing plate 14 is opposed to the bottom wall 12a of the case body 12. A liquid injection hole 15 and a gas exhaust valve 17 are provided in the sealing plate 14. The liquid injection hole 15 is a through hole through which the electrolytic solution is injected into the case 10 after assembling the sealing plate 14 to the case body 12. The liquid injection hole 15 is sealed by a sealing member 16 after injecting the electrolytic solution. The gas exhaust valve 17 is configured so as to be broken when a pressure in the case 10 becomes a predetermined value or more and discharge gas in the case 10 to outside. Although not particularly limited, the average thickness (an average plate thickness) of the sealing plate 14 may be generally 0.3 mm or more and, for example, 0.5 mm or more from a viewpoint of durability or the like, may be generally 5 mm or less and, for example, 3 mm or less, and may be 2.5 mm or less from a viewpoint of costs and an energy density.

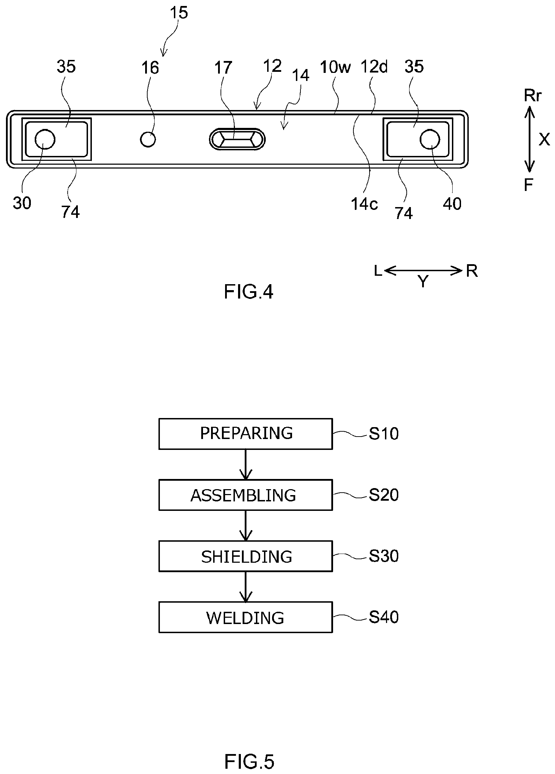

FIG. 4 is a plan view of the battery of FIG. 1. As illustrated in FIG. 4, a peripheral edge portion 14c of the sealing plate 14 and a peripheral edge portion of the opening 12h (which will be hereinafter referred to as an "opening peripheral edge portion 12d") of the case body 12 are welded and joined to each other, and a welded portion 10w is formed along a boundary between the case body 12 and the sealing plate 14. Welding and joining described above can be realized, for example, by laser welding. The welded portion 10w is a portion formed by melting of a component metal of the case body 12 and a component metal of the sealing plate 14 by laser welding of the boundary between the case body 12 and the sealing plate 14. Herein, the welded portion 10w is located at an outer surface 14a side of the sealing plate 14. In the welded portion 10w, an inner peripheral edge of the opening 12h of the case body 12 and the peripheral edge portion 14c of the sealing plate 14 are preferably connected so as to flush with each other. The welded portion 10w is continuously formed in an annular shape along the boundary between the sealing plate 14 and the case body 12 when viewed from top.

### <Method for Manufacturing Secondary Battery>

As one preferred embodiment of a method for manufacturing an electrical storage device disclosed herein, a lithium-ion secondary battery will be described as an example, but it is not intended to limit a target to which the technology disclosed herein is applied to a battery.

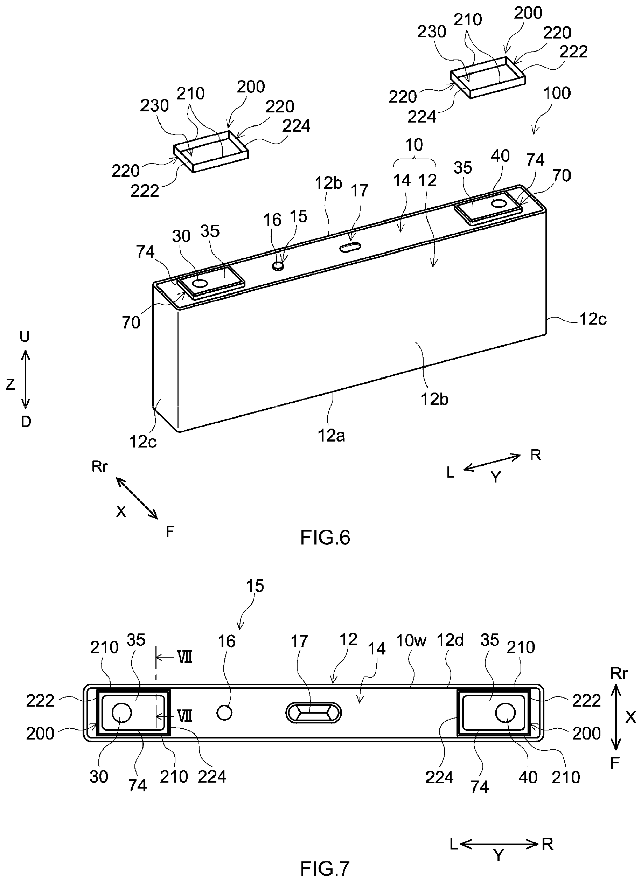

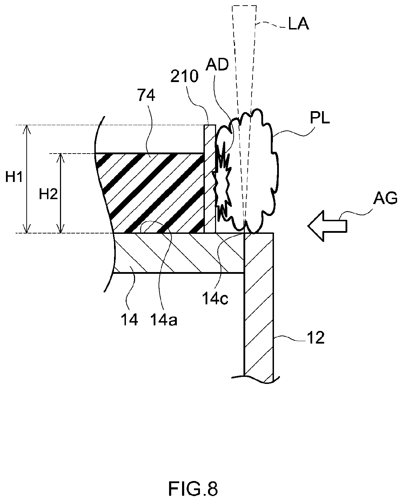

FIG. 5 is a flowchart roughly illustrating a method for manufacturing a battery according to one preferred embodiment. FIG. 6 is a schematic perspective view of the battery illustrating a shielding step S30. FIG. 7 is a schematic plan view of the battery illustrating the shielding step S30. FIG. 8 is a schematic cross-sectional view taken along line VIII-VIII in FIG. 7, illustrating a welding step S40. In this preferred embodiment, the method for manufacturing a battery can include a preparing step S10 of preparing the case body 12, the sealing plate 14 configured such that the resin member 70 is mounted on the outer surface thereof, and the electrode body 20, which have been described above, an assembling step S20 of assembling an electrical storage device by mounting the sealing plate 14 to the case body 12, a shielding step S30 of providing a shielding portion between the resin member 70 and the peripheral edge portion 14c of the sealing plate 14 on the outer surface 14a of the sealing plate 14, and a welding step S40 of welding the case body 12 and the sealing plate 14 by irradiating the sealing plate 14 with laser light LA along the peripheral edge portion 14 of the sealing plate 14. In the welding step S40, an assist gas including a non-oxidizing gas and an oxidizing gas is preferably used. Note that the manufacturing method disclosed herein may further include some other process step in an arbitrary stage, and one or more of process steps can be omitted and an order of the process steps can be changed as appropriate. For example, the shieling step S30 may be performed at any time before the welding step S40. For example, the shielding step S30 may be performed in parallel to the preparing step S10, and may be performed before the assembling step S20.

Generally, laser welding of the case body and the sealing plate is performed while supplying a non-oxidizing gas (for example, an inert gas atmosphere, such as nitrogen, argon, or the like) to the welded portion. This is partly because a metal (for example, aluminum) that forms the case body and the sealing plate is highly active with oxygen, so that weldability can be reduced when laser welding is performed in an oxidizing atmosphere. However, when the non-oxidizing gas is supplied to the welded portion, a plume that is generated interferes with a member (for example, a resin member) in vicinity of the welded portion and a black deposit is generated on the member. The black deposit is likely to absorb reflected light of the laser light and a temperature thereof is likely to be increased. Therefore, a member on which the black deposit is generated and some other member that contacts the member tend to receive a thermal effect. Therefore, in one aspect of the manufacturing method disclosed herein, a shielding member 200 as the shielding portion is arranged between the peripheral edge portion 14c of the sealing plate 14 that is to be laser-welded and a member (for example, a resin member) mounted on the sealing plate 14 (see FIG. 7). Thus, a plume PL that is generated by laser welding interferes with the shielding member 200, so that interference of the member mounted on the sealing plate 14 with the plume can be reduced. Moreover, in one aspect of the manufacturing method disclosed herein, an assist gas AG including a non-oxidizing gas and an oxidizing gas is supplied to the peripheral edge portion 14c of the sealing plate 14 located around the shielding member 200 (see FIG. 8). Accordingly, it was found by a study of the present inventors that a deposit AD on the shielding member 200 generated when the assist gas AG is supplied has a lighter black color than that of the deposit generated when the non-oxidizing gas is supplied (a black color preferably does not appear). Since the black color of the deposit AD is lighter, the reflected light of the laser light LA is less likely to be absorbed by the deposit AD. Thus, the thermal effect on the resin member (the external insulating member 74 in FIG. 8) that contacts the shielding member 200 or is located near the shielding member 200 can be reduced.

In the preparing step S10, the case body 12, the sealing plate 14, and the electrode body 20 that have been described above are prepared. The electrode body 20 can be fabricated in accordance with a known method. As illustrated in FIG. 3, when the electrode body 20 is a wound electrode body, the wound electrode body can be prepared, for example, in the following manner. First, the strip-shaped positive electrode sheet 22 and the strip-shaped negative electrode sheet 24 are stacked so as to be insulated from each other by the two strip-shaped separators 26. At this time, the strip-shaped positive electrode sheet 22 and the strip-shaped negative electrode sheet 24 are arranged to overlap each other such that the positive electrode tabs 22t of the positive electrode sheet 22 and the negative electrode tabs 24t of the negative electrode sheet 24 protrude from corresponding end portions of the two separators 26 in the long side direction Y in opposite directions. Subsequently, a prepared stacked body is wound in the longitudinal direction with a winding axis as a center. Winding of the stacked body can be performed in accordance with a known method. The wound stacked body is subjected to press processing, thereby fabricating a flat wound electrode body. The press processing may be performed using a known press machine used for fabrication of a general flat wound electrode body, and there is no particular limitation thereon. In the above-described manner, the electrode body 20 can be prepared.

In the preparing step S10, for example, the gasket 72 that is an example of the resin member 70 is attached to the sealing plate 14 in accordance with a known method. For example, the gasket 72 is inserted through the terminal mounting hole 18 of the sealing plate 14 in a state of being mounted to the positive electrode terminal 30 and the positive electrode terminal 30 is fixed to the sealing plate 14, so that the gasket 72 is also fixed to the sealing plate 14. There is no particular limitation on a fixing method. For example, the positive electrode terminal 30 and the gasket 72 are mounted on the sealing plate 14 by caulking a lower end portion of the positive electrode terminal 30 located at an inner side of the case body 12 to the sealing plate 14 via the gasket 72. At this time, at least a portion of the gasket 72 is exposed at the outer surface 14a side of the sealing plate 14. In the secondary battery 100 described above, furthermore, the external conductive member 35 and the external insulating member 74 that is an example of the resin member 70 are mounted at the outer surface 14a side of the sealing plate 14. In this case, the external insulating member 74 is arranged as a resin member located near the peripheral edge portion 14c of the sealing plate 14. Note that mounting of the external insulating member 74 and the external conductive member 35 to the sealing plate 14 may be performed after the assembling step S20 that will be described later. Note that, similar to the positive electrode terminal 30 described above, at a negative electrode terminal 40 side, the gasket 72, the external insulating member 74, and the external conductive member 35 can be mounted on the sealing plate 14.

In other preferred embodiments, when the external insulating member 74 is not provided, for example, the gasket 72 can be a resin member that is located near the peripheral edge portion 14c of the sealing plate 14. In other preferred embodiments, an electrode terminal, the sealing plate 14, and the resin member 70 may be prepared as an integrated molded article.

In the assembling step S20, the prepared electrode body 20 is accommodated in the case body 12 and the sealing plate 14 is mounted on the case body 12, thereby assembling the secondary battery 100. For example, first, the electrode body 20 is attached to the sealing plate 14. The sealing plate 14 and the electrode body 20 are connected to each other via the positive electrode current collector 50 and the negative electrode current collector 60. Subsequently, the electrode body 20 is inserted in the case body 12. At this time, the electrode body 20 may be inserted to be arranged in the case body 12 such that the winding axis WL extends along the bottom wall 12a (that is, the winding axis WL extends in a direction parallel to the long side direction Y).

The sealing plate 14 is mounted to the opening 12h of the case body 12. In this preferred embodiment, an outer diameter of the sealing plate 14 is slightly smaller than an inner diameter of the opening 12h of the case body 12, and the sealing plate 14 is fitted in the opening 12h. At this time, the peripheral edge portion 14c of the sealing plate 14 preferably contacts the opening peripheral edge portion 12d of the case body 12.

In the shielding step S30, on the outer surface 14a of the sealing plate 14, the shielding portion is provided between a member mounted on the sealing plate 14 and the peripheral edge portion 14c of the sealing plate 14. Examples of the member mounted on the sealing plate 14 include, for example, the electrode terminal (the positive electrode terminal 30 or the negative electrode terminal 40), the resin member 70 (for example, the gasket 72 or the external insulating member 74), the external conductive member 35, or the like. With the shielding portion provided, the thermal effect on the member mounted on the sealing plate 14 caused by laser welding can be reduced, so that the member mounted on the sealing plate 14 can be protected. In one preferred aspect, the shielding portion is provided between the resin member 70 mounted on the sealing plate 14 and the peripheral edge portion 14c of the sealing plate 14. This is because the resin member 70 is easily deteriorated by the thermal effect. In the following description, as an example of the member mounted on the sealing plate 14 (a protection target member that is to be protected by the shielding portion), the external insulating member 74 will be described, but the member mounted on the sealing plate 14 is not limited thereto.

As illustrated in FIG. 6, in this preferred embodiment, as the shielding portion, the shielding member 200 is prepared. As illustrated in FIG. 7, the shielding member 200 is arranged between the external insulating member 74 and the peripheral edge portion 14c of the sealing plate 14 on the outer surface 14a of the sealing plate 14. The shielding member 200 includes a through hole 230 herein. The through hole 230 is surrounded by a pair of first side walls 210 opposed to each other and a pair of second side walls 220 opposed to each other. The through hole 230 has a size that is large enough to surround the member (for example, a resin member, specifically, the external insulating member 74) arranged on the outer surface 14a of the sealing plate 14. Herein, the through hole 230 has an approximately rectangular shape when viewed from top. The first side walls 210 are long sides of the through hole 230 and the second side walls 220 are short sides of the through hole 230. The first side walls 210 are arranged to extend in the long side direction Y of the secondary battery 100 and the second side walls 220 are arranged to extend in the short side direction X of the secondary battery 100 (see FIG. 7). The first side walls 210 extend along (for example, in parallel to) the peripheral edge portion 14c of the sealing plate 14 in the long side direction Y of the secondary battery 100. The second side walls 220 extend along (for example, in parallel to) the peripheral edge portion 14c of the sealing plate 14 in the short side direction X of the secondary battery 100.

The second side walls 220 include an outer side wall 222 arranged at a side closer to the end portion of the sealing plate 14 and an inner side wall 224 arranged at a side closer to a center of the sealing plate 14. The outer side wall 222 is arranged between the peripheral edge portion 14c of the sealing plate 14 and the external insulating member 74. Although, in other preferred embodiments, the inner side wall 224 can be omitted, with the shielding member 200 configured such that the shielding member 200 includes the inner side wall 224, the shielding member 200 can be easily fixed to the outer surface 14a of the sealing plate 14.

The shielding member 200 is preferably arranged such that at least a portion of the shielding member 200 contacts the external insulating member 74. For example, the first side walls 210 are preferably installed to hold the external insulating member 74. Thus, the shielding member 200 is fixed to the external insulating member 74, and the shielding member 200 can be arranged with good stability.

As illustrated in FIG. 8, a height H1 of the shielding member 200 (the first side walls 210 as an example in FIG. 8) is preferably higher than a height H2 of the external insulating member 74 from the outer surface 14a of the sealing plate 14 (for example, a height of the end portion at a side of the shielding member 200). Thus, it is easier to prevent the plume PL that is generated by laser welding from interfering with the external insulating member 74. Moreover, the external insulating member 74 can be prevented from being irradiated with the reflected light of the laser light LA, and therefore, the thermal effect can be reduced.

The shielding member 200 is preferably configured to be attachable and removable to and from the sealing plate 14. Preferably, after laser welding, the shielding member 200 is removed from the outer surface 14a of the sealing plate 14. Thus, the deposit AD on the shielding member 200 can be removed, and an aesthetic property is increased. Moreover, the shielding member 200 can be repeatedly used, and therefore, costs can be reduced.

The shielding member 200 is not particularly limited as long as the shielding member 200 can shield the laser light LA, and can be formed of, for example, a metal, a resin, or the like. From a viewpoint of heat resistance, the shielding member 200 is preferably formed of a metal. As the metal, for example, stainless steel, aluminum, or the like is used. It is preferable that a surface of the shielding member 200 opposed to a laser welded portion has been subjected to plating processing (mirror processing) that increases a reflection performance of the laser light LA on the surface of the shielding member 200. Thus, the reflected light of the laser light LA is less likely to be absorbed by the shielding member 200, and the thermal effect can be reduced. Examples of the plating processing include, for example, silver plating processing, chromium plating processing, or the like.

In the welding step S40, in a state where the shielding portion is provided, the sealing plate 14 is irradiated with the laser light LA along the peripheral edge portion 14c of the sealing plate 14 such that the case body 12 and the sealing plate 14 are laser welded. Thus, the welded portion 10w is formed at the boundary between the case body 12 and the sealing plate 14, and the case 10 is airtightly sealed.

The assist gas AG is preferably supplied to a portion (the peripheral edge portion 14c of the sealing plate 14) irradiated with the laser light LA around the shielding portion (the shielding member 200 in this case). The assist gas AG includes a non-oxidizing gas and an oxidizing gas. The assist gas AG can be a mixed gas obtained by mixing the non-oxidizing gas and the oxidizing gas in advance. Alternatively, the non-oxidizing gas and the oxidizing gas may be supplied to the portion irradiated with the laser light LA from different supply ports.

As used in this specification, the term "the peripheral edge portion of the sealing plate located around the shielding portion" refers to a portion of the peripheral edge potion of the sealing plate 14 in which the shielding portion is present in a direction perpendicular to a tangent of the peripheral edge portion (a straight line for a straight line portion of the peripheral edge portion) when viewed from top. Specifically, the term refers to a portion where the peripheral edge portion of the sealing plate 14 and the shielding portion are located closest to each other when viewed from top. Herein, the term refers to two approximately lateral U-shaped portions that are located at both end portions in the long side direction Y and each of which is opposed to the shielding portion (the shielding member 200) when viewed from top. Although not particularly limited, in this portion, a distance between the shielding portion (the shielding member 200) and the peripheral edge portion of the sealing plate 14 can be generally 5 mm or less, typically, 3 mm or less, and for example, about 1 to 2 mm.

A direction in which the assist gas AG is supplied is not particularly limited. For example, as illustrated in FIG. 8, the assist gas AG can be supplied toward the shielding portion (the shielding member 200) from a side of the side wall of the case body 12. Thus, the assist gas AG can be applied to the shielding member 200, and therefore, the black color of the deposit AD can be made further lighter. In addition, for example, the assist gas AG may be allowed to flow toward the outer surface 14a of the sealing plate 14. For example, the assist gas AG may be allowed to flow along the peripheral edge portion 14c of the sealing plate 14. Note that, as used in this specification, the term "to supply the assist gas AG to a portion that is irradiated with the laser light LA" can encompass not only a state where the assist gas AG is directly applied to the portion that is irradiated with the laser light LA but also a state where the assist gas AG is supplied to around the portion (for example, a region over the portion that is irradiated with the laser light LA).

In laser welding of the sealing plate 14 and the case body 12 around the shielding portion (the shielding member 200), it is preferable to radiate the laser light LA with the assist gas AG supplied. Thus, the black color of the deposit AD can be reliably made lighter, and therefore, the thermal effect of the laser light LA can be reduced.

A ratio of the oxidizing gas in the assist gas is, for example, 5 vol% or more, and is preferably 6 vol%, 7 vol%, or 7.5 vol% or more. The higher the ratio is, the lighter the black color of the deposit AD can be made. The ratio may be, for example, 10 vol% or less, and can be 9 vol% or less or 8 vol% or less. When the ratio of the oxidizing gas in the assist gas AG is too high, weldability of the sealing plate 14 and the case body 12 can be reduced. Note that the above "vol%" represents volume percentage.

As for the oxidizing gas, a gas that promotes combustion better than air is preferable and, specifically, an oxygen gas is preferable. As for the non-oxidizing gas, an inert gas is preferable and examples of the non-oxidizing gas include, for example, a nitrogen gas, an argon gas, or the like.

In a position distant from the shielding portion (the shielding member 200), it is preferable to supply a gas (a second gas) including the oxidizing gas at a lower ratio than that in the assist gas AG to at least a portion of the portion (the peripheral edge portion 14c of the sealing plate 14) that is irradiated with the laser light LA. Furthermore, it is more preferable that the second gas substantially does not include the oxidizing gas and is formed of the non-oxidizing gas. Thus, the weldability of the sealing plate 14 and the case body 12 is increased. As used herein, "the peripheral edge portion of the sealing plate that is distant from the shieling section" can be, for example, a portion other than "the peripheral edge portion of the sealing plate that is located around the shielding portion" described above.

There is no particular limitation on a type of the laser light LA as long as the case body 12 and the sealing plate 14 can be welded. The laser light LA may be, for example, solid-state laser (for example, YAG laser, glass laser, ruby laser, or the like), liquid laser (for example, dye laser or the like), gas laser (for example, COz laser or the like), fiber laser, disk laser, semiconductor laser, free electron laser, chemical laser, or the like. A wavelength of the laser light LA is preferably, for example, 300 nm to 1100 nm. Thus, the case body 12 and the sealing plate 14 can be preferably welded.

There is no particular limitation on laser conditions as long as the case body 12 and the sealing plate 14 can be welded. An output value of laser is, for example, 1000 W or more and 5000 W or less, and can be 1500 W or more and 3000 W or less. A scanning speed of laser is, for example, 100 mm/sec to 300 mm/sec, and can be 150 mm/sec to 250 mm/sec.

### <Modifications>

In the preferred embodiment described above, the shielding member 200 includes the pair of first side walls 210 and the pair of second side walls 220. However, the present disclosure is not limited thereto. For example, in another preferred embodiment, the inner side wall 224 of the second side wall 220 of the shielding member 200 may be omitted, and a shielding member having a lateral U-shape (a U-shape) when viewed from top may be used.

In still another preferred embodiment, the shielding member 200 may not include the pair of second side walls 220. For example, in the secondary battery 100, a distance between the short side of the peripheral edge portion 14c of the sealing plate 14 (the short side of the secondary battery 100 in the end portion thereof in the long side direction Y) and a member (for example, the external insulating member 74) mounted on the sealing plate 14 is longer than a distance between the long side of the peripheral edge portion 14c of the sealing plate 14 and the member (for example, the external insulating member 74) mounted on the sealing plate 14. This is because, in the above-described configuration, laser welding of the short side of the peripheral edge portion 14c of the sealing plate 14 has relatively little (or no) effect on the member mounted on the sealing plate 14.

In still another preferred embodiment, the shielding member 200 may not be formed such that the first side walls 210 and the second side walls 220 are continuous. In this case, a member (for example, a plate-like member) corresponding to each of the individual side walls of the shielding member 200 may be prepared and used as the shielding portion.

In still another preferred embodiment, the shielding member 200 may not include the through hole 230. For example, the shielding member may be configured to have a bottomed box shape having an opening. In this case, the side walls of the shielding member may be similar to, for example, those of the shielding member 200 described above. The box-shaped shielding member described above may be arranged on the outer surface 14a of the sealing plate 14 with the opening facing the outer surface 14a of the sealing plate 14, and a member mounted on the sealing plate 14 (a protection target member that is to be protected by the shielding portion) may be accommodated in the opening.

In still another preferred embodiment, the shielding portion may be a portion of the sealing plate 14. For example, the outer surface 14a of the sealing plate 14 may be provided with a protruding portion that protrudes from the outer surface 14a as the shielding portion. The protrusion portion can be formed, for example, by a pressing work.

### <Application of Battery>

The battery described above can be used for various applications, and can be preferably used as a power source (a drive power source) for a motor mounted on a vehicle, such as, for example, a passenger vehicle, a truck, or the like. There is no particular limitation on a vehicle type. Examples of the vehicle type include, for example, a plug-in hybrid electric vehicle (PHEV), a hybrid electric vehicle (HEV), a battery electric vehicle (BEV), or the like. The battery can be preferably used for constructing an assembled battery.

Preferred embodiments of the present technology have been described above, but the preferred embodiments are merely examples. The present technology can be implemented in various other embodiments. The present technology can be carried out based on contents disclosed in this specification and the common general technical knowledge in the field. The technology described in the scope of claims includes various modifications and changes of the preferred embodiments described above as examples. For example, a portion of any one of the preferred embodiments described above can be replaced with some other modified aspect. Some other modified aspect can be added to any one of the preferred embodiments described above. Additionally, a technical feature can be deleted as appropriate unless the technical feature is described as an essential element.

As described above, the following items are given as specific aspects of the technology disclosed herein.
First Item: A method for manufacturing an electrical storage device, that includes preparing a bottomed case body having an opening, a sealing plate provided with a resin member on an outer surface, and an electrode body, assembling a storage battery including accommodating the electrode body in the case body and mounting the sealing plate to the opening of the case body, shielding including providing a shielding portion between the resin member and a peripheral edge portion of the sealing plate, and laser welding the case body and the sealing plate by irradiating the sealing plate with laser light along the peripheral edge portion of the sealing plate in a state where the shielding portion is provided, and in which, in performing the laser welding, an assist gas including a non-oxidizing gas and an oxidizing gas is supplied to at least the peripheral edge portion of the sealing plate located around the shielding portion and a portion to which the assist gas is supplied is irradiated with the laser light.
Second Item: The method for manufacturing an electrical storage device according to the first item, in which a ratio of the oxidizing gas in the assist gas is 5 vol% or more.
Third Item: The method for manufacturing an electrical storage device according to the first or second item, in which the ratio of the oxidizing gas in the assist gas is 10 vol% or less.
Fourth Item: The method for manufacturing an electrical storage device according to any one of the first to third items, in which the shielding portion is a member that can be attached and removed.
Fifth Item: The method for manufacturing an electrical storage device according to the fourth item, that further includes, after the laser welding, removing the shielding portion from the outer surface of the sealing plate.
Sixth Item: The method for manufacturing an electrical storage device according to any one of the first to fifth items, in which, in performing the laser welding, a second gas including an oxidizing gas at a lower ratio than that in the assist gas is supplied to the peripheral edge portion of the sealing plate located distant from the shielding portion and a portion to which the second gas is supplied is irradiated with the laser light.
Seventh Item: The method for manufacturing an electrical storage device according to the sixth item, in which the second gas is formed of a non-oxidizing gas.

### DESCRIPTION OF REFERENCE CHARACTERS

- 10: Case
- 12: Case body
- 14: Sealing plate
- 14a: Outer surface
- 14b: Inner surface
- 14c: Peripheral edge portion
- 20: Electrode body
- 22: Positive electrode sheet
- 24: Negative electrode sheet
- 26: Separator
- 30: Positive electrode terminal
- 35: External conductive member
- 40: Negative electrode terminal
- 50: Positive electrode current collector
- 60: Negative electrode current collector
- 70: Resin member
- 72: Gasket
- 74: External insulating member
- 100: Secondary battery
- 200: Shielding member
- 210: First side wall
- 220: Second side wall

## Claims

1. A method for manufacturing an electrical storage device, the method comprising:
preparing (S10) a bottomed case body (12) having an opening (12h), a sealing plate (14) provided with a resin member (70) on an outer surface (14a), and an electrode body (20);
assembling (S20) an electrical storage device including accommodating the electrode body (20) in the case body (12) and mounting the sealing plate (14) to the opening (12h) of the case body (12);
shielding (S30) including providing a shielding portion (200) between the resin member (70) and a peripheral edge portion (14c) of the sealing plate (14); and
laser welding (S40) the case body (12) and the sealing plate (14) by irradiating the sealing plate (14) with laser light (LA) along the peripheral edge portion (14c) of the sealing plate (14) in a state where the shielding portion (200) is provided,
wherein
in performing the laser welding, an assist gas (AG) including a non-oxidizing gas and an oxidizing gas is supplied to at least the peripheral edge portion (14c) of the sealing plate (14) located around the shielding portion (200) and a portion to which the assist gas (AG) is supplied is irradiated with the laser light (LA).

2. The method for manufacturing an electrical storage device according to claim 1,
wherein
a ratio of the oxidizing gas in the assist gas (AG) is 5 vol% or more.

3. The method for manufacturing an electrical storage device according to claim 1 or 2,
wherein
the ratio of the oxidizing gas in the assist gas (AG) is 10 vol% or less.

4. The method for manufacturing an electrical storage device according to any one of claims 1 to 3,
wherein
the shielding portion (200) is a member that can be attached and removed.

5. The method for manufacturing an electrical storage device according to claim 4, the method further comprising after the laser welding:
removing the shielding portion (200) from the outer surface (14a) of the sealing plate (14).

6. The method for manufacturing an electrical storage device according to any one of claims 1 to 5,
wherein
a second gas including an oxidizing gas at a lower ratio than that in the assist gas (AG) is supplied to the peripheral edge portion (14c) of the sealing plate (14) located distant from the shielding portion (200) and a portion to which the second gas is supplied is irradiated with the laser light (LA).

7. The method for manufacturing an electrical storage device according to claim 6,
wherein
the second gas is formed of a non-oxidizing gas.
